(19) Europäisches Patentamt
European Patent Office
Office européen des brevets

(11) **EP 3 038 354 B1**

(12) **FASCICULE DE BREVET EUROPEEN**

(45) Date de publication et mention
de la délivrance du brevet:
**28.04.2021 Bulletin 2021/17**

(51) Int Cl.:
***H04N 7/18*** *(2006.01)*  ***G02B 27/01*** *(2006.01)*
***G08B 13/196*** *(2006.01)*

(21) Numéro de dépôt: **15202682.9**

(22) Date de dépôt: **24.12.2015**

(54) **PROCÉDÉ D'AFFICHAGE D'IMAGES OU DE VIDÉOS**

BILD- ODER VIDEOANZEIGEVERFAHREN

A METHOD FOR DISPLAYING IMAGES OR VIDEOS

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **24.12.2014 FR 1403008**

(43) Date de publication de la demande:
**29.06.2016 Bulletin 2016/26**

(73) Titulaire: **THALES**
**92400 Courbevoie (FR)**

(72) Inventeur: **BOUDIN, Thierry**
**78141 VELIZY CEDEX (FR)**

(74) Mandataire: **Lavoix**
**2, place d'Estienne d'Orves**
**75441 Paris Cedex 09 (FR)**

(56) Documents cités:
**EP-A1- 2 597 619      EP-A1- 2 624 581
WO-A1-2012/153805   JP-A- 2008 160 203
US-A1- 2002 036 649   US-A1- 2012 068 914**

EP 3 038 354 B1

**Description**

La présente invention concerne un procédé d'affichage d'images ou de vidéos.

L'invention concerne également un système associé d'affichage d'images ou de vidéos.

Dans le domaine de la vidéo surveillance, des opérateurs, par exemple la police, l'armée ou encore une société de sécurité, ont pour rôle de détecter des situations à risque sur des vidéos provenant de caméras de vidéos surveillance.

Dans ce contexte, les opérateurs se trouvent confrontés à des problématiques liées, notamment, au grand nombre de vidéos à visualiser en temps réel.

Pour permettre aux opérateurs de visualiser plusieurs vidéos simultanément, les vidéos sont généralement affichées en temps réel sur des murs d'écrans. Un mur d'écrans est formé d'un ensemble d'écrans agencés côte à côte pour former une matrice d'écrans. Un mur d'écrans permet de visualiser simultanément plusieurs vidéos filmant, notamment, des zones géographiques différentes ou une même zone géographique selon des points de vue différents.

Actuellement, la taille limitée des murs d'écrans, limite le nombre de vidéos visibles et interprétables par un opérateur. Or, plus le nombre de vidéos visualisées par un opérateur est grand, plus la probabilité que l'opérateur détecte un incident ou une situation à risque lors de ses missions de surveillance est grande.

En outre, dans le cas d'un mur d'écrans de grande largeur, l'opérateur doit se déplacer pour visualiser des vidéos localisées à des extrémités opposées du mur d'écrans. De plus, la réalisation d'actions sur les vidéos d'un mur d'écrans, par exemple un arrêt sur image ou un zoom, nécessite l'utilisation de périphériques extérieurs, situés plus ou moins loin des écrans affichant les vidéos d'intérêt et n'est donc pas optimale en termes d'ergonomie.

En outre, l'affichage de vidéos sur un mur d'écrans est consommateur d'énergie et génère des nuisances sonores et thermiques. De plus, si l'on souhaite augmenter le nombre de vidéos visualisables sur un mur d'écrans, une plus grande surface est requise pour disposer le mur d'écrans, ce qui augmente l'empreinte au sol. Par ailleurs, une utilisation optimale d'un mur d'écrans impose un certain nombre de contraintes, notamment, un champ de vision dégagé entre l'opérateur et le mur d'écrans, ainsi que des conditions d'éclairage minimisant les reflets sur les écrans afin de ne pas éblouir l'opérateur. Les murs d'écrans sont, par conséquent, des systèmes dont le coût de mise en place est onéreux.

Le document US 2002/036649 A décrit un exemple de procédé d'affichage. Le document US 2012/068914 A porte sur un exemple d'un casque présentant un afficheur. Le document EP 2 624 581 A concerne un procédé et un système pour diviser un écran en plusieurs régions. Le document WO 2012/153805 concerne un système de surveillance utilisant un HMD pour visualiser une image synthétique d'un modèle 3D de l'environnement à surveiller, cette image étant définie en fonction de la position et de orientation du HMD. Le document JP 2008 160203 décrit un système de surveillance dans lequel une ou plusieurs images/vidéos provenant de caméras de surveillance sont affichées sur un petit écran de type HMD dans le champ de vue de l'utilisateur.

Un but de l'invention est de permettre l'affichage de plusieurs images ou vidéos simultanément sur un même écran d'affichage tout en facilitant la réalisation d'actions sur les images ou vidéos affichées.

A cet effet, la présente invention concerne un procédé d'affichage selon la revendication 1.

Suivant des modes particuliers de mise en œuvre, le procédé d'affichage comprend une ou plusieurs des caractéristiques des revendications 2 à 7, prise(s) isolément ou selon toutes les combinaisons techniquement possibles.

La présente invention porte également sur un système d'affichage selon la revendication 8.

Suivant un mode particulier de mise en œuvre, le système d'affichage peut comprendre la caractéristique de la revendication 9.

D'autres caractéristiques et avantages de l'invention apparaîtront à la lecture de la description qui suit de modes de réalisation de l'invention, données uniquement à titre d'exemples non limitatifs et en référence aux dessins annexés dans lesquels :

- la figure 1 est une représentation schématique d'un système d'affichage permettant la mise en œuvre d'un procédé d'affichage selon l'invention,
- la figure 2 est une représentation schématique d'un casque de réalité virtuelle dans un premier repère,
- la figure 3 est un organigramme d'un exemple de mise en œuvre d'un procédé d'affichage selon l'invention,
- la figure 4 est une représentation schématique d'un exemple d'une surface de projection de forme sphérique dans un deuxième repère,
- la figure 5 est une représentation schématique d'un autre exemple de surface de projection de forme cylindrique dans le deuxième repère de la figure 4,
- la figure 6 est une représentation schématique d'encore d'autres exemples de surfaces de projection de formes cylindrique, sphérique et plane dans le deuxième repère de la figure 4,
- les figures 7, 8 et 9 sont des représentations schématiques de parties d'une surface de projection affichée sur l'afficheur de la figure 2, et
- les figures 10, 11 et 12 sont des représentations schématiques de parties d'une autre surface de projection affichées sur l'afficheur de la figure 2.

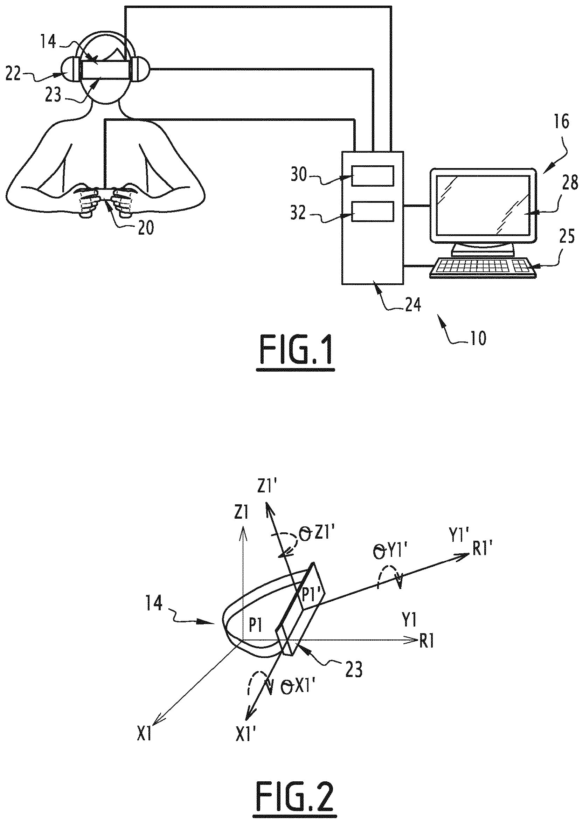

Un système d'affichage 10, illustré sur la figure 1, est propre à mettre en œuvre un procédé d'affichage d'images ou de vidéos selon l'invention. Les images ou les vidéos sont fournies, par exemple, par des caméras de vidéosurveillance et/ou des enregistreurs vidéos.

Le système d'affichage 10 comprend un casque de réalité virtuelle 14 et un calculateur 16 en interaction avec le casque de réalité virtuelle 14.

Dans le mode de réalisation illustré sur la figure 1, le système d'affichage 10 comprend, en outre, des périphériques 20 d'acquisition de commandes de l'utilisateur et des dispositifs 22 de restitution du son, chacun de ces périphériques et dispositifs étant optionnels.

Le casque de réalité virtuelle 14 est configuré pour immerger l'utilisateur dans une réalité virtuelle. Une réalité virtuelle ou monde virtuel est une simulation informatique interactive immersive, visuelle, sonore et/ou haptique, d'environnements réels ou imaginaires.

Le casque de réalité virtuelle 14 est propre à être positionné sur la tête d'un utilisateur. Ainsi, le casque de réalité virtuelle 14 est mobile conjointement avec la tête de l'utilisateur.

Le casque de réalité virtuelle 14 est connecté au calculateur 16 et est propre à échanger des données avec le calculateur 16.

Le casque de réalité virtuelle 14 comprend, notamment, un afficheur 23 et des capteurs de détection de mouvements.

En variante, le casque 14 comprend au moins deux afficheurs 23 distincts.

L'afficheur 23 est propre à être placé en position fixe en face des yeux de l'utilisateur. L'afficheur 23 est un écran configuré pour afficher, notamment, des images ou des vidéos.

Les coordonnées de l'afficheur 23 sont repérées dans un premier repère R1 illustré en figure 2.

Comme illustré sur la figure 2, le premier repère R1 a un centre P1 et trois axes orthogonaux X1, Y1, Z1 orientés selon trois directions X1, Y1, Z1. Le premier repère R1 est fixe dans le référentiel terrestre.

Comme visible sur la figure 2, l'afficheur 23 est associé à un repère d'affichage R1' de centre P1' et ayant trois axes orthogonaux X1', Y1', Z1' orientés selon trois directions X1', Y1', Z1'. L'axe X1' et l'axe Z1' sont parallèles au plan de l'afficheur 23 du casque 14. L'axe Y1' est perpendiculaire au plan de l'afficheur 23 du casque 14. Le centre P1' du repère d'affichage R1' est le centre de l'afficheur 23 du casque 14. Le repère d'affichage R1' est fixe par rapport à l'afficheur 23 mais mobile par rapport au premier repère R1.

Les coordonnées du centre P1 du repère R1 sont les coordonnées initiales du centre P1' du repère R1'. De même, les directions d'orientation X1, Y1, Z1 du repère R1 sont respectivement identiques aux directions initiales d'orientation X1', Y1', Z1' du repère R1'.

Les angles $\Theta X1'$, $\Theta Y1'$, $\Theta Z1'$ permettent de mesurer les mouvements de rotation du casque 14 dans le référentiel terrestre. Ces mouvements sont, par exemple, dus aux mouvements de la tête de l'utilisateur lorsque le casque 14 est positionné sur la tête de l'utilisateur. En particulier, l'angle $\Theta X1'$ permet de mesurer le tangage du casque 14, c'est-à-dire la rotation du repère d'affichage R1' autour de l'axe X1'. L'angle $\Theta Y1'$ permet de mesurer le roulis du casque 14, c'est-à-dire la rotation du repère d'affichage R1' autour de l'axe Y1'. L'angle $\Theta Z1'$ permet de mesurer le lacet du casque 14, c'est-à-dire la rotation du repère d'affichage R1' autour de l'axe Z1'.

La longueur de l'afficheur 23 dans la direction de l'axe X1' est, par exemple, comprise entre 100 millimètres (mm) et 300 mm. La largeur de l'afficheur 23 dans la direction de l'axe Z1' est, par exemple, comprise entre 30 mm et 150 mm.

Les capteurs sont des capteurs de détection de mouvements. Les capteurs sont configurés pour mesurer les mouvements effectués par l'afficheur 23 porté par la tête de l'utilisateur.

Les capteurs sont configurés pour transmettre les mouvements mesurés au calculateur 16. Les capteurs sont ainsi connectés au calculateur 16.

Les capteurs sont, par exemple, des accéléromètres, des gyromètres, des boussoles, des fils à plomb numériques, des magnétomètres, des gyroscopes ou des capteurs de pression.

Le calculateur 16 est, par exemple, un ordinateur comportant un processeur 24, et optionnellement un clavier 25 et une unité d'affichage 28. Le calculateur 16 comporte, en outre, des connexions à un réseau tel que le réseau local permettant à plusieurs utilisateurs de se connecter en réseau.

Le processeur 24 comprend une unité de traitement de données 30 et une mémoire 32. Dans la mémoire 32 est stocké un programme d'ordinateur comprenant des instructions de programme. Le programme d'ordinateur est chargeable sur l'unité de traitement de données 30 et est adapté pour entraîner la mise en œuvre d'un procédé d'affichage selon l'invention lorsque le programme d'ordinateur est mis en œuvre sur l'unité de traitement des données 30.

Le programme d'ordinateur comprend, notamment, un module d'acquisition de flux de données propre à déclencher, en interaction avec l'unité de traitement de données 30, l'acquisition de données en provenance de caméras de vidéos surveillance et/ou d'enregistreurs vidéos. Le programme d'ordinateur comprend, en outre, un module d'acquisition de mouvements propres à réceptionner et à traiter, en interaction avec l'unité de traitement de données 30, les données envoyées par les capteurs du casque 14 ou les périphériques 20 d'acquisition de commandes de l'utilisateur. Le programme d'ordinateur comprend, également, un module de calcul, ainsi qu'un module de traitement d'images et un module d'affichage.

Une base de données est, avantageusement, stockée dans la mémoire 32. La base de données comprend, des références d'accès à au moins un élément choisi dans un groupe comportant : des vidéos, des images et des données audios.

Les vidéos ou images sont issues de caméras de vidéosurveillance propres à envoyer en temps réel ou en temps différé les images ou vidéos acquises au système d'affichage 10. De telles images ou vidéos sont, par exemple, envoyées au système d'affichage 10 selon un protocole Ethernet connu en soi, conforme aux normes du groupe IEEE 802.3, ou suivant un protocole de transmission sans fil suivant les normes du groupe IEEE 802.11 (Wi-Fi) ou du groupe IEEE 802.15 (Bluetooth).

Les caméras de vidéosurveillance sont, par exemple, disposées en environnement urbain dans des zones prédéterminées et potentiellement éloignées géographiquement du système d'affichage 10.

Les données audios sont, notamment, les données audios associées aux vidéos.

Les périphériques 20 d'acquisition de commandes sont configurés pour permettre à l'utilisateur du casque 14 d'envoyer des commandes au calculateur 16.

Les périphériques 20 sont, par exemple, choisis dans un groupe comprenant : un joystick, un pédalier, une manette, une souris d'ordinateur, une dalle tactile, et un analyseur de la voix d'un utilisateur. Un joystick est un périphérique informatique comportant, notamment, un manche posé sur un socle ainsi que des boutons, des gâchettes et des sticks. Un stick est un joystick analogique de petite taille qui se manie avec le pouce.

Le clavier 25 du calculateur 16 est également utilisable comme périphérique 20 d'acquisition de commandes.

Les périphériques 20 sont configurés pour acquérir des commandes, lorsque l'utilisateur effectue, par exemple, au moins l'une des opérations choisies dans un groupe comprenant : l'appui court ou long sur un bouton ou une gâchette d'un joystick, l'appui court ou long sur une combinaison de boutons et/ou de gâchettes d'un joystick, l'orientation de sticks d'un joystick avec des angles variables dans le temps, l'appui sur une ou plusieurs pédales d'un pédalier avec des angles variables dans le temps ou en mode tout ou rien, l'énonciation à voix haute de commandes vocales, la rotation d'une molette d'une souris, des actions de tapotement ou de glissement d'un ou plusieurs doigts sur une dalle tactile et l'appui court ou long sur un ou plusieurs boutons d'une souris.

Le dispositif 22 de restitution du son est, par exemple, un casque audio. Un casque audio est un dispositif qui se place contre les oreilles d'un utilisateur et qui a pour fonction de restituer des contenus sonores aux oreilles de l'utilisateur.

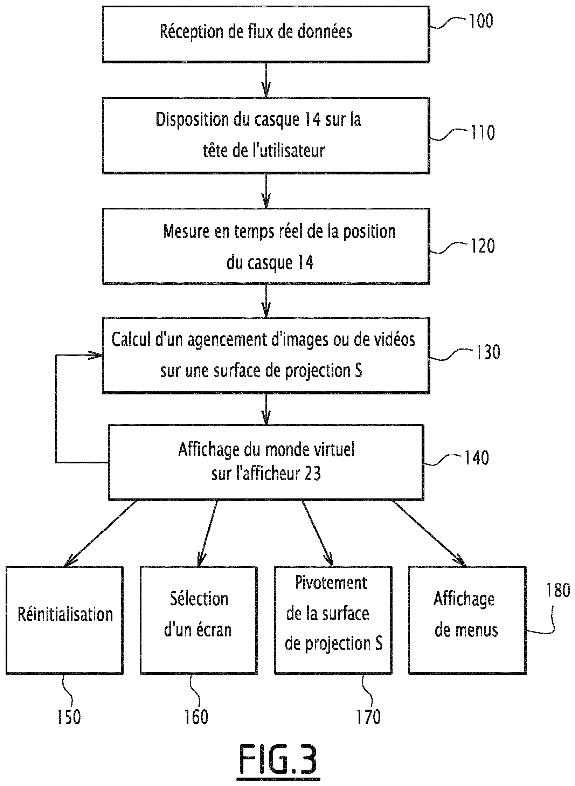

Le fonctionnement du système d'affichage 10 va maintenant être décrit en référence à la figure 3 qui est un organigramme d'un exemple de mise en œuvre d'un procédé d'affichage selon l'invention.

Le procédé d'affichage comprend, une étape 100 de réception de flux de données en provenance de caméras de vidéosurveillance. Les flux de données sont, par exemple, acquis en temps réel ou en temps différé et enregistrés dans la base de données du calculateur 16. Les données acquises sont, notamment, des vidéos et/ou des images.

L'étape de réception 100 est mise en œuvre par le module d'acquisition de flux de données du programme d'ordinateur du calculateur 16 en interaction avec l'unité de traitement 30.

Le procédé comprend, ensuite, une étape 110 de disposition du casque 14 sur la tête de l'utilisateur de sorte que le centre de l'afficheur 23 soit placé au centre de la vision binoculaire de l'utilisateur. La vision binoculaire est un mode de vision dans lequel les deux yeux d'un utilisateur sont utilisés simultanément.

Le procédé comprend, ensuite, une étape 120 d'acquisition en temps réel de la position du casque 14 dans le premier repère R1 au moyen des capteurs du casque 14. En particulier, les coordonnées du centre P1' et les valeurs des angles $\Theta X1'$, $\Theta Y1'$, $\Theta Z1'$ dans le premier repère R1 sont mesurées avec un intervalle de temps. L'intervalle de temps est, par exemple, compris entre 0,5 millisecondes (ms) et 15 ms.

La position du casque 14 est transmise en temps réel au calculateur 16 au moyen du module d'acquisition de mouvements du programme d'ordinateur en interaction avec l'unité de traitement 30.

Le procédé d'affichage comprend, ensuite, une étape 130 de calcul d'un agencement d'au moins deux images ou vidéos sur au moins une surface de projection S. Les images ou vidéos sont les images ou vidéos acquises lors de l'étape de réception 100 ou les images ou vidéos dont le chemin d'accès est stocké dans la base de données de la mémoire 30.

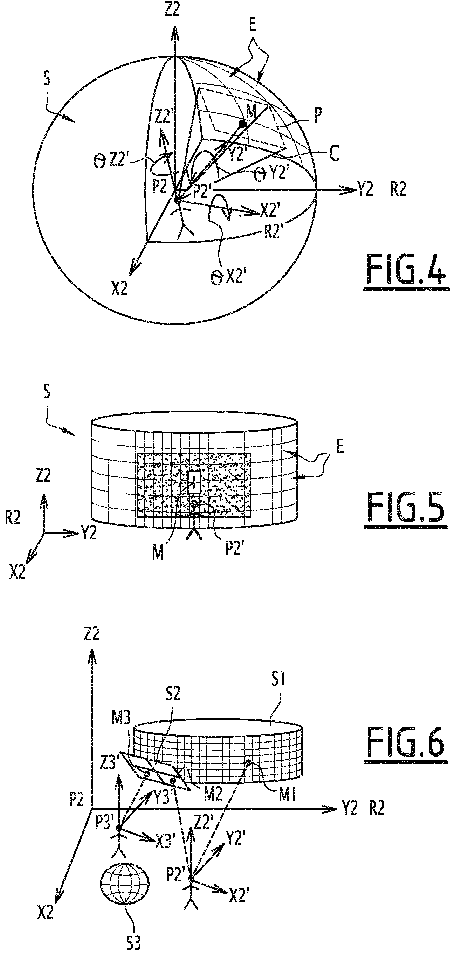

Comme illustré sur la figure 4, une surface de projection S est un objet mathématique appartenant à un monde virtuel défini dans un deuxième repère R2 de centre P2 et ayant trois axes orthogonaux X2, Y2, Z2 orientés selon trois directions X2, Y2, Z2. Le deuxième repère R2 est fixe par rapport au premier repère R1 illustré en figure 3. Le deuxième repère R2 est l'image du premier repère R1 par une combinaison de transformations géométriques, par exemple, des translations et des rotations. Dans l'exemple de la figure 4, la surface de projection S est de forme sphérique et le centre P2 du deuxième repère R2 est le centre de la surface de projection S.

Chaque surface de projection S a une forme choisie, par exemple, dans un groupe comprenant : une sphère, un cylindre, un ellipsoïde, un hyperboloïde, un paraboloïde et un plan.

La surface de projection S présente une face interne et une face externe. Au moins l'une de la face interne et de la face externe comprend des écrans E configurés pour afficher des images ou des vidéos stockées en mémoire. Les écrans E sont des emplacements d'affichage sur la surface de projection S. Les écrans E sont de dimensions identiques ou différentes selon les écrans E. Chaque écran E comprend une configuration de repos selon laquelle aucune vidéo ou image n'est affichée sur l'écran E et une configuration d'affichage selon laquelle une vidéo ou une image est affichée sur l'écran E.

Selon l'invention, l'étape 130 de calcul d'un agencement comprend le calcul de la position de chaque image ou vidéo considérée sur la surface de projection S de sorte que chaque position d'une image ou d'une vidéo soit localisée à l'emplacement d'un écran E différent pour chaque image ou vidéo. Il est entendu par le terme « agencement d'images ou de vidéos » la disposition sur la surface de projection S des images ou vidéos selon une disposition prédéfinie ou non. L'agencement des images ou vidéos sur la face interne et/ou la face externe de la surface de projection S est enregistré dans la mémoire 30 du calculateur 16.

En variante, l'agencement des images ou vidéos est réalisé de manière aléatoire ou est choisi par l'utilisateur au moyen du clavier 25 et/ou de l'un des périphériques 20 et du calculateur 16.

Le calcul d'un agencement est mis en œuvre par le module de calcul du programme d'ordinateur en interaction avec l'unité de traitement 30.

Les images ou vidéos sont ensuite traitées et mises en forme pour que chaque image ou vidéo soit la projection d'une image initialement rectangulaire sur la surface de projection S. Un tel traitement est mis en œuvre par le module de traitement du programme d'ordinateur en interaction avec l'unité de traitement 30.

Selon l'invention, les images ou vidéos sont, ensuite, affichés sur les écrans E correspondants de la surface de projection S. Un tel affichage est mis en œuvre par le module de calcul du programme d'ordinateur en interaction avec l'unité de traitement 30.

Selon l'invention, les images ou vidéos agencées sur la surface de projection S sont indépendantes les unes des autres. Ainsi, de telles images ou vidéos proviennent, par exemple, de caméras de vidéosurveillance différentes.

Dans l'exemple illustré sur la figure 4, la surface de projection S a une forme sphérique et des images ou vidéos sont agencées sur la face interne de la surface de projection S.

Dans l'exemple illustré sur la figure 5, la surface de projection S a une forme cylindrique et des images ou vidéos sont agencées sur la face externe de la surface de projection S.

L'exemple de la figure 6 illustre trois surfaces de projection : la première S1 a une forme cylindrique, la deuxième S2 a une forme plane et la troisième S3 a une forme sphérique. Des images ou vidéos sont agencées sur les faces externes de chacune de ces surfaces de projection S1, S2, S3.

Le procédé d'affichage comprend, ensuite, une étape 140 d'affichage sur l'afficheur 23 d'une ou de toutes les parties des différentes surfaces de projection S ou de tout autres éléments du monde virtuel se trouvant dans un cône C ayant un sommet (défini dans ce qui suit) et une hauteur (dont l'orientation est définie dans ce qui suit), ainsi que des génératrices formant chacune un angle prédéfini avec la hauteur du cône. L'angle prédéfini est, par exemple, égal à 60°.

L'étape d'affichage 140 comprend, notamment, une première phase de détermination des éléments du monde virtuel situés dans le cône C, puis de projection des éléments déterminés sur une surface plane P perpendiculaire à la hauteur du cône C. La surface plane P est délimitée par les génératrices du cône C et passe par l'élément déterminé le plus éloigné du sommet du cône C. Les éléments projetés sur la surface plane P sont donc vus depuis un point d'observation et suivant une direction d'observation définis dans le deuxième repère R2. Le point d'observation est le sommet du cône C et la direction d'observation est selon la hauteur du cône C. Un tel cône C est, par exemple, illustré sur la figure 4.

L'étape d'affichage 140 comprend ensuite une deuxième phase d'affichage de la surface plane P sur l'afficheur 23.

La première phase de l'étape d'affichage 140 comprend le calcul de la position du point d'observation, c'est-à-dire du sommet du cône C, et de la direction d'observation, c'est-à-dire de la direction de la hauteur du cône C, définis dans le deuxième repère R2. Le point d'observation et la direction d'observation sont déterminés en temps réel en fonction de la position mesurée du casque 14 dans le premier repère R1.

Ainsi, comme illustré sur la figure 4, il est défini un repère de référence R2' de centre P2' et ayant trois axes orthogonaux X2', Y2', Z2' orientés selon trois directions X2', Y2', Z2'. Le centre P2' du repère de référence R2' est le point d'observation, c'est-à-dire le sommet du cône C. La direction Y2' est la direction d'observation, c'est-à-dire la direction de la hauteur du cône C. Le repère de référence R2' est mobile dans le deuxième repère R2.

La position du centre P2' du repère de référence R2' est calculée à partir de la position du centre P1' du repère d'affichage R1' dans le premier repère R1. Plus précisément, les coordonnées du centre P2' du repère de référence R2' dans le deuxième repère R2, sont données par l'équation suivante :

$$\boldsymbol{P2'} = f(\boldsymbol{P1'}) + \boldsymbol{P2'_{init}} \text{ , (eq1)}$$

où les termes en gras sont des vecteurs,
f est une fonction permettant de transformer les coordonnées d'éléments dans le premier repère R1 en coordonnées dans le deuxième repère R2, f étant par exemple l'identité,
$\boldsymbol{P2'}$ est un vecteur des coordonnées du centre P2' du repère de référence R2' dans le deuxième repère R2,
$\boldsymbol{P1'}$ est un vecteur des coordonnées du centre P1' du repère d'affichage R1' dans le premier repère R1, et
$\boldsymbol{P2'_{init}}$ est un vecteur des coordonnées du centre P2' du repère de référence R2' dans le deuxième repère R2 à l'état initial, c'est-à-dire avant la première mesure de la position du casque 14 de réalité virtuelle, ou à la ré-initialisation du système d'affichage 10.

Les coordonnées du vecteur $\boldsymbol{P2'_{init}}$ dans le

deuxième repère R2 sont enregistrées dans la mémoire 30 du calculateur 16 et sont modifiables par l'utilisateur au moyen du calculateur 16 ou des périphériques 20 ou du clavier 25 du calculateur 16. Par exemple, les coordonnées du vecteur **P2'**<sub>init</sub> sont nulles, et, le point d'observation P2' est situé au centre du deuxième repère R2 à l'état initial.

Les angles ΘX2', ΘY2', ΘZ2' du repère de référence R2' permettent de modéliser des changements de la direction Y2' d'observation dus à des déplacements de l'afficheur 23 suite, par exemple, aux mouvements de la tête de l'utilisateur. En particulier, l'angle ΘX2' permet de modéliser le changement de direction d'observation dû au tangage de l'afficheur 23, c'est-à-dire la rotation du repère de référence R2' autour de l'axe X2'. L'angle ΘY2' permet de modéliser le changement de direction d'observation dû au roulis de l'afficheur 23, c'est-à-dire la rotation du repère de référence R2' autour de l'axe Y2'. L'angle ΘZ2' permet de modéliser le changement de direction d'observation dû au lacet de l'afficheur 23, c'est-à-dire la rotation du repère de référence R2' autour de l'axe Z2'. Les angles ΘX2', ΘY2', ΘZ2' permettent ainsi de déterminer les changements de directions des axes X2', Y2' et Z2' dans le deuxième repère R2 et donc de déterminer la direction Y2' d'observation de la surface de projection S dans le deuxième repère R2.

Les valeurs des angles ΘX2', ΘY2', ΘZ2' dans le deuxième repère R2 sont calculées à partir des valeurs des angles ΘX1', ΘY1', ΘZ1' dans le premier repère R1. Plus précisément, les valeurs des angles ΘX2', ΘY2', ΘZ2' dans le deuxième repère R2 sont donnés par les équations suivantes :

$$\theta X2' = f(\theta X1') + \theta X2'_{init} \ , \text{(eq2)}$$

$$\theta Y2' = f(\theta Y1') + \theta Y2'_{init}, \text{(eq3)}$$

$$\theta Z2' = f(\theta Z1') + \theta Z2'_{init} \ \text{(eq4)}$$

où f est une fonction permettant de transformer les coordonnées d'éléments dans le premier repère R1 en coordonnées dans le deuxième repère R2, f étant par exemple l'identité, et

$\theta X2'_{init}$, $\theta Y2'_{init}$, $\theta Z2'_{init}$ sont respectivement les valeurs initiales des angles ΘX2', ΘY2', ΘZ2' dans le deuxième repère R2, c'est-à-dire les valeurs des angles ΘX2', ΘY2', ΘZ2' avant la première mesure de la position du casque 14. Par exemple, les valeurs des angles $\theta X2'_{init}$, $\theta Y2'_{init}$, $\theta Z2'_{init}$ sont nulles à l'état initial.

La première phase de l'étape d'affichage 140 comprend, ensuite, la détermination de l'ensemble des éléments du monde virtuel situés dans le cône C. Les éléments compris dans le cône C sont, par exemple, des parties d'une ou plusieurs surface de projection S.

La première phase de l'étape d'affichage 140 comprend, ensuite, la détermination de l'élément du monde virtuel compris dans le cône C et le plus éloigné du sommet du cône C, c'est-à-dire du point d'observation P2', ce qui permet de déterminer la surface plane P. Une telle surface plane P est, par exemple, illustrée en pointillés sur la figure 4. La surface plane P est tangente en un point M à la surface de projection S et est donc à l'extérieur de la sphère de la surface de projection de la figure 4. Le centre de la surface plane P est matérialisé par le point M.

La première phase de l'étape d'affichage 140 comprend, ensuite, la projection des éléments situés dans le cône C sur la surface plane P déterminée. Les éléments sont projetés par ordre croissant de la distance de chaque élément au sommet du cône C de façon à ne pas calculer les parties non visibles depuis le point d'observation. Ainsi, un élément proche du sommet du cône C peut potentiellement masquer un élément plus éloigné du sommet du cône C qui ne sera alors pas projeté.

L'étape d'affichage 140 comprend, ensuite, une deuxième phase d'affichage sur l'afficheur 23 de la surface plane P, et en particulier des éléments projetés sur cette surface plane P. Un coefficient de réduction ou de multiplication est appliqué aux dimensions de la surface plane P et donc à la projection des éléments sur la surface plane P de sorte que les dimensions de la surface plane P soient égales aux dimensions de l'afficheur 23. Ainsi, l'intégralité des éléments projetés sur la surface plane P est affichée sur l'afficheur 23. Le coefficient de réduction ou de multiplication est le rapport entre une dimension de l'afficheur 23, par exemple la largeur de l'afficheur 23, et une dimension correspondante de la surface plane P, dans cet exemple la largeur de la surface plane P.

Le centre de la surface plane P, c'est-à-dire le point M, est, par exemple, modélisé au centre de la vision binoculaire produite par l'afficheur 23, par un pointeur en forme de croix ou par un point représentant le point M. Le centre de la surface plane P dans le deuxième repère R2, c'est-à-dire le point M, est au centre de la vision binoculaire produite par l'afficheur 23 lors de l'affichage de la surface plane P sur l'afficheur 23.

Ainsi, plus le point d'observation P2' est proche du point M dans le deuxième repère R2, plus les dimensions de la surface plane P sont petites dans le deuxième repère R2 et plus la partie de la surface de projection S est agrandie ou vue de près sur l'afficheur 23. Rapprocher le point d'observation P2' du point M dans le deuxième repère R2 équivaut donc à zoomer sur l'afficheur 23. De même, plus le point d'observation P2' est éloigné du point M dans le deuxième repère R2, plus les dimensions de la surface plane P sont grandes dans le deuxième repère R2 et plus la partie de la surface de projection S est rétrécie ou vue de loin sur l'afficheur 23. Eloigner le point d'observation P2' du point M équivaut à dé-zoomer sur l'afficheur 23.

La figure 6 illustre différentes positions du point M et du point d'observation P2'. Comme illustré sur la figure 6 depuis le point d'observation P2', au moins une partie de la surface de projection cylindrique S1 est affichable sur l'afficheur 23, notamment dans la direction d'observation du point M1, ainsi qu'au moins une partie de la surface de projection plane S2, notamment dans la direction d'observation du point M2 et au moins une partie de la surface de projection sphérique S3 suivant une direction Y2' d'observation fournie par la position de l'afficheur 23 dans le premier repère R1. Depuis le point d'observation P3', au moins une partie de la surface de projection plane S2 est affichable sur l'afficheur 23, notamment dans la direction d'observation du point M3, ainsi qu'au moins une partie de la surface de projection sphérique S3. En revanche, depuis le point d'observation P3', aucune direction d'observation ne permet l'affichage de la surface de projection cylindrique S1 sur l'afficheur 23, cette surface S1 étant masquée par la surface de projection S2 quelle que soit la direction d'observation depuis le point d'observation P3'.

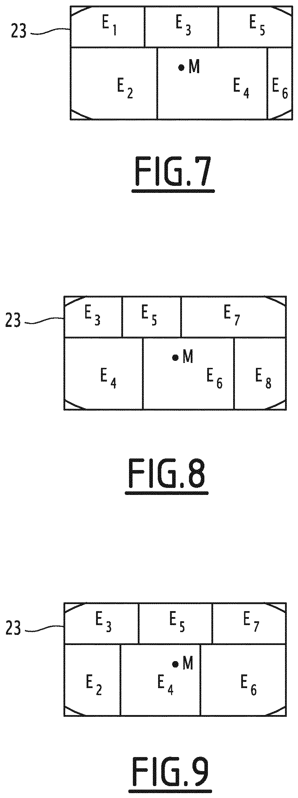

La figure 7 est un exemple d'éléments du monde virtuel affichés sur l'afficheur 23. Dans cet exemple, les éléments affichés sont en totalité une partie d'une surface de projection S comprenant, notamment, des écrans E1 à E8. Bien que cela ne soit pas le cas sur la figure 7, ces écrans E1 à E8 pourraient être éventuellement masqués par des objets du monde virtuels se trouvant entre le point d'observation P2' et ces écrans E1 à E8. Chaque écran E1 à E8 est dans une configuration de repos ou dans une configuration d'affichage. Les écrans E3, E4 et E5 sont entièrement affichés sur l'afficheur 23. Les écrans E1, E2 et E6 ne sont que partiellement affichés sur l'afficheur 23, certaines parties de ces écrans E1, E2, E6 n'étant pas affichées. Les écrans E6 à E8 ne sont pas affichés sur l'afficheur 23. L'affichage de la figure 7 est, par exemple, obtenu à partir de la configuration du deuxième repère R2 illustrée en figure 4.

La figure 8 illustre une autre partie de la surface de projection S de la figure 7 affichée sur l'afficheur 23. Le passage de l'affichage de la figure 7 à l'affichage de la figure 8 est, par exemple, obtenu lorsque la position du casque 14 est translatée dans la direction X1' du premier repère R1' et qu'une rotation est appliquée au casque 14 autour de l'axe Z1', par exemple suite à un mouvement de la tête de l'utilisateur. Ainsi, dans le deuxième repère R2 le point d'observation P2' est inchangé mais la direction Y2' d'observation est modifiée et donc l'orientation de la hauteur du cône C. Ainsi, les écrans E6, E7 et E8 sont affichés en totalité ou en partie sur l'afficheur 23 et les écrans E1 et E2 ne sont plus affichés sur l'afficheur 23.

La figure 9 illustre encore une autre partie de la surface de projection S de la figure 7 affichée sur l'afficheur 23. Le passage de l'affichage de la figure 7 à l'affichage de la figure 9 est, par exemple, obtenu lorsque la position du casque 14 est translatée dans la direction X1 du premier repère R1 dans un sens opposé au sens permettant de passer de l'affichage de la figure 7 à l'affichage de la figure 8.

D'autres mouvements du casque 14, par exemple, des changements de la position P1' ou des angles ΘX1', ΘY1', ΘZ1' du casque 14 dans le premier repère R1, permettent l'affichage d'écrans non visibles sur l'afficheur 23 situés, par exemple, à la droite, à la gauche, en haut ou en bas du point M dans le deuxième repère R2.

En complément, l'étape d'affichage 140 comprend la reproduction du son des vidéos affichée sur l'afficheur 23 et, avantageusement, en contact avec le point M dans le deuxième repère R2 et donc sur l'afficheur 23. Le volume du son de chaque vidéo est adapté en fonction de la proximité du centre de chaque vidéo au point d'observation P2' dans le monde virtuel et/ou d'une commande envoyée par l'utilisateur au moyen de l'un des périphériques 20. Par exemple, lorsque le centre d'une vidéo est confondu avec le point P2', le son est maximum moyennant un facteur de volume réglable par l'utilisateur. Lorsque la distance entre le centre d'une vidéo et le point P2' augmente, alors le son associé à la vidéo diminue.

L'étape d'affichage 140 est mise en œuvre par les modules de calcul, de traitement et d'affichage du programme d'ordinateur en interaction avec l'unité de traitement 30 et le casque 14.

Les étapes d'acquisition 120, de calcul 130 et d'affichage 140 sont itérées à intervalles de temps réguliers de sorte que la position du point d'observation P2' et la direction Y2' d'observation sont recalculées lors des déplacements du casque 14.

Le procédé comprend, optionnellement, une étape 150 de réinitialisation de la position du deuxième repère R2 par rapport au premier repère R1. Le deuxième repère R2 est alors déplacé par rapport au premier repère R1. La réinitialisation se traduit par un changement des coordonnées du vecteur P2'$_{init}$ et/ou un changement des valeurs des angles $\theta X2'_{init}$, $\theta Y2'_{init}$, $\theta Z2'_{init}$.

L'étape de réinitialisation est déclenchée suite, par exemple, à la réception d'une commande de réinitialisation envoyée par l'utilisateur au moyen des périphériques 20. La commande de réinitialisation est traitée par le module de calcul du programme d'ordinateur en interaction avec l'unité de traitement 30.

Le procédé comprend, optionnellement, une étape 160 de sélection d'écrans E affichés sur l'afficheur 23 et de réalisation d'actions sur les écrans sélectionnés.

L'étape de sélection 160 comprend une première phase de mise en mémoire tampon d'un écran E de la partie de la surface de projection S projetée sur la surface plane lorsque l'écran E est affiché sur un endroit prédéfini de l'afficheur 23. L'endroit prédéfini de l'afficheur 23 est, par exemple, le centre de l'afficheur 23. La mise en mémoire tampon est effectuée dans la mémoire 32 du calculateur 16.

La première phase comprend, également, la mise en évidence sur la surface de projection S de l'écran E mis en mémoire tampon. La mise en évidence d'un écran E consiste, par exemple, à changer la forme et/ou le contour de l'écran E sur la surface de projection S et donc sur l'afficheur 23. La mise en évidence d'un écran E permet à l'utilisateur du casque 14 de connaître précisément l'écran E sur lequel peut porter sa prochaine action. Dans le cas d'une utilisation multi-utilisateurs, les autres utilisateurs ont accès précisément à l'écran E situé au centre de l'afficheur 23 de l'utilisateur.

Lorsque l'écran E n'est plus affiché au centre de l'afficheur 23, l'écran E est supprimé de la mémoire tampon et n'est plus mis en évidence sur la surface de projection S.

L'étape de sélection 160 comprend, ensuite, une deuxième phase de réception d'une commande de sélection de l'écran E mis en mémoire tampon. La commande de sélection est envoyée par l'utilisateur au moyen des périphériques 20 et est traitée par le module de calcul du programme d'ordinateur en interaction avec l'unité de traitement 30.

L'écran E sélectionné est conservé en mémoire tampon même lorsque l'écran E n'est plus affiché au centre de l'afficheur 23.

La deuxième phase comprend, également, le maintien de la mise en évidence de l'écran E sélectionné sur la surface de projection S même lorsque l'écran E n'est plus affiché au centre de l'afficheur 23.

L'étape de sélection 160 comprend, ensuite, facultativement la sélection d'un autre écran E en répétant chacune de la première et de la deuxième phase de l'étape de sélection. L'étape de sélection 160 permet la sélection d'un nombre d'écrans inférieur ou égal au nombre d'écrans E de la surface de projection S.

L'étape 160 de sélection comprend ensuite, optionnellement, l'une des troisième, quatrième, cinquième, sixième et septième phases suivantes prises isolément ou dans toutes les combinaisons techniquement possibles.

La troisième phase comprend la désélection d'un écran E suite à la réception d'une commande de désélection envoyée par l'utilisateur au moyen des périphériques 20. La commande de désélection est traitée par le module de calcul du programme d'ordinateur en interaction avec l'unité de traitement 30.

L'écran E désélectionné est supprimé de la mémoire tampon et n'est plus maintenu en évidence sur la surface de projection S.

La quatrième phase comprend l'inversion de la position de deux écrans E sélectionnés suite à la réception d'une commande d'inversion envoyée par l'utilisateur au moyen des périphériques 20. La commande d'inversion est traitée par le module de calcul du programme d'ordinateur en interaction avec l'unité de traitement 30. Par l'expression « inversion de deux écrans », il est entendu que chaque écran prend la position de l'autre écran.

La cinquième phase consiste à déplacer un écran E sélectionné comprenant une image ou une vidéo à l'emplacement d'un autre écran E de la surface de projection S.

La cinquième phase comprend, en premier lieu, la réception d'une commande de déplacement envoyée par l'utilisateur au moyen des périphériques 20. La commande de déplacement est traitée par le module de calcul du programme d'ordinateur en interaction avec l'unité de traitement 30.

Puis, la cinquième phase comprend la mise en mémoire tampon d'une copie de l'image ou de la vidéo affichée sur l'écran E sélectionné.

La cinquième phase comprend, également, l'affichage de la copie au centre de l'afficheur 23 de sorte que la copie soit placée au centre de l'afficheur 23 même lorsque l'afficheur 23 est déplacé. Ainsi, le centre de l'afficheur 23 est occupé par la copie. En revanche, les autres parties de l'afficheur 23 affichent différents éléments du deuxième repère R2 projetés sur la surface plane P en fonction des déplacements de l'afficheur 23.

La cinquième phase comprend, ensuite, la suppression de l'image ou de la vidéo sur l'écran E sélectionné dans le deuxième repère R2.

La cinquième phase comprend, ensuite, le déplacement de l'image ou de la vidéo copiée dans le deuxième repère R2 en fonction des déplacements de l'afficheur 23.

La cinquième phase comprend, ensuite, la réception d'une commande de décrochage de l'image ou de la vidéo copiée envoyée par l'utilisateur au moyen des périphériques 20. La commande de décrochage est traitée par le module de calcul du programme d'ordinateur en interaction avec l'unité de traitement 30.

Lorsqu'à la réception de la commande de décrochage, le point M du deuxième repère R2 n'est pas localisé sur un écran E d'une surface de projection S, la cinquième phase comprend la translation et/ou le pivotement de l'image ou de la vidéo copiée dans le deuxième repère R2 jusqu'à ce que l'image ou la vidéo copiée reprenne sa position initiale sur l'écran E préalablement sélectionné.

Lorsqu'à la réception de la commande de décrochage, le point M du deuxième repère R2 est localisé sur un autre écran E déjà dans une configuration d'affichage, la copie est affichée sur l'écran E à la place de l'image ou de la vidéo initiale. L'image ou la vidéo initialement affichée sur l'autre écran E est copiée et positionnée sur l'afficheur 23 de sorte que la copie soit placée au centre de l'afficheur 23 même lorsque l'afficheur 23 est déplacé. La cinquième phase est alors répétée pour la dernière vidéo copiée.

Lorsqu'à la réception de la commande de décrochage, le point M du deuxième repère R2 est localisé sur un écran E d'une surface de projection S dans une configuration de repos, l'image ou la vidéo copiée est affichée sur l'écran E.

La sixième phase comprend, lorsque l'écran E sélectionné est dans une configuration d'affichage, la suppression de l'image ou de la vidéo affichée sur l'écran E sélectionné suite à la réception d'une commande de suppression envoyée par l'utilisateur au moyen des périphériques 20. La commande de suppression est traitée par le module de calcul du programme d'ordinateur en interaction avec l'unité de traitement 30.

La septième phase comprend, lorsque le ou les écrans E sélectionnés sont dans une configuration d'affichage de vidéos, au moins l'une des actions suivantes : la mise en pause de la vidéo d'au moins un écran E sélectionné, l'avance rapide de la vidéo d'au moins un écran E sélectionné, la lecture à rebours de la vidéo d'au moins un écran E sélectionné et le rembobinage de la vidéo d'au moins un écran E sélectionné. Chaque action fait suite à la réception d'une commande envoyée par l'utilisateur au moyen des périphériques 20 et est traitée par le module de calcul du programme d'ordinateur en interaction avec l'unité de traitement 30.

Le procédé d'affichage comprend, optionnellement, une étape 170 de pivotement ou de mise en rotation de la surface de projection S dans le deuxième repère R2.

L'étape 170 de pivotement est mise en œuvre pour des formes spécifiques de surfaces de projection S et/ou des positions spécifiques du point d'observation P2' qui ne permettent pas de parcourir, via l'afficheur 23, l'intégralité de la surface de projection S quelles que soient les directions Y2' d'observation depuis le point d'observation P2'.

L'étape 170 de pivotement comprend le pivotement dans le deuxième repère R2 de la surface de projection S sur elle-même, lorsque le centre M de l'afficheur 23 est situé sur une zone prédéterminée de l'environnement virtuel pendant un temps prédéterminé. La surface de projection S pivote continuellement sur elle-même d'un pas prédéterminé, par exemple, égal à 20° par seconde jusqu'à ce que le point M quitte la zone prédéterminée ayant déclenché l'action. La zone prédéterminée est, par exemple, un bord de la surface de projection S affiché sur l'afficheur 23 ou un objet présent dans le monde en réalité virtuel. Le temps prédéterminé est par exemple égal à 2 secondes.

Par exemple, comme illustré sur la figure 5, la forme de la surface de projection S est cylindrique et le point d'observation P2' est situé du côté de la face externe de la surface de projection S, la face externe comprenant des écrans E. Dans la configuration de la figure 5, seule une certaine partie de la face externe de la surface de projection S est affichable sur l'afficheur 23 quelle que soit la direction Y2' d'observation depuis le point d'observation P2' illustré en figure 5 (la partie affichable est matérialisée par un rectangle sur la figure 5). si la surface de projection S restait fixe. Lorsque le point M est situé sur une zone prédéterminée du monde virtuel appelée zone de défilement, pendant par exemple plus de 2 secondes, le module de calcul du programme d'ordinateur en interaction avec l'unité de traitement 30 modifie les coordonnées de la surface de projection S dans le deuxième repère R2 pour faire pivoter la surface de projection S à une vitesse angulaire prédéterminée jusqu' ce que le point M ne soit plus situé sur la zone de défilement. La zone de défilement est éventuellement relative à la position courante du point P2', par exemple lorsque le lacet est compris entre 20° et 22° et que le tangage est compris entre 12° et 18°. La vitesse angulaire prédéterminée est éventuellement variable en fonction de la position du point M par rapport au centre de la zone de défilement et est par exemple égale à 5° par seconde.

Ainsi, la totalité de la face externe de la surface de projection S est affichable sur l'afficheur 23 depuis le point d'observation P2'.

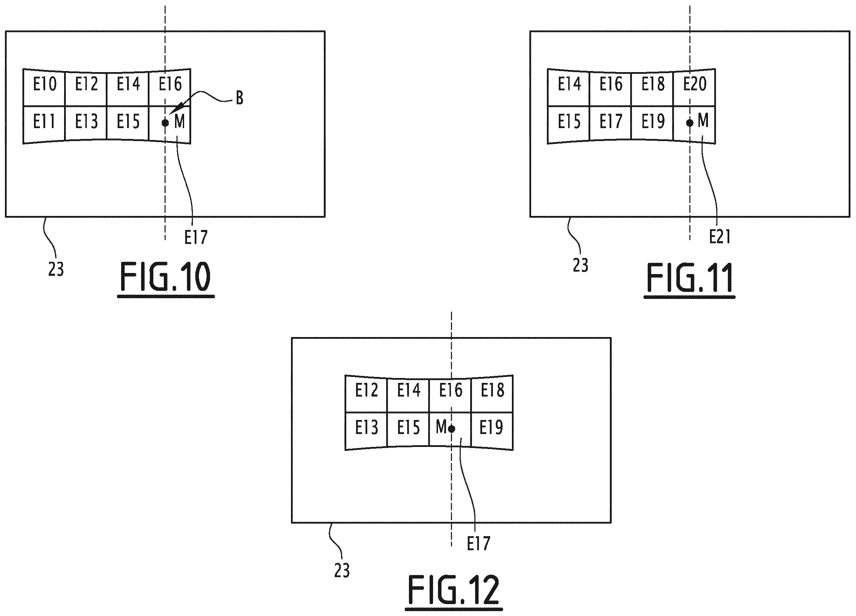

Les figures 10 et 11 illustrent le pivotement d'une surface de projection S affichée sur l'afficheur 23 Sur la figure 10, le point M de la surface plane P est situé sur une zone prédéterminée du monde virtuel ici à proximité d'un bord B de la surface de projection S affiché. Le passage de l'affichage de la figure 10 à l'affichage de la figure 11 est obtenu par pivotement sur elle-même de la surface de projection S sans changer la direction Y2' d'observation et la position du point d'observation P2'. Le passage de l'affichage de la figure 11 à l'affichage de la figure 12 est obtenu par changement de la direction Y2' d'observation depuis le même point d'observation P2'.

Le procédé comprend, optionnellement, une étape 180 d'affichage de menus suite à la réception d'une commande de menus envoyée par l'utilisateur au moyen des périphériques 20. La commande de menus est traitée par le module de calcul du programme d'ordinateur en interaction avec l'unité de traitement 30.

Un menu est un élément d'interface graphique dans lequel est présentée une liste de commandes sous forme de textes ou d'images. Les menus sont affichés sur une surface de projection S, par exemple sur un écran E, dans le deuxième repère R2 du monde virtuel, ou entre la surface de projection S et le point d'observation P2' dans le deuxième repère R2 du monde virtuel ou directement sur l'afficheur 23 dans le premier repère R1. Les menus peuvent être affichés en permanence sur l'afficheur 23 sur commandes de l'utilisateur. Les menus comprennent des zones d'actions permettant de déclencher différentes actions. Par exemple, une zone d'action permet de commander la mise en œuvre de l'étape de réinitialisation 150 ou de l'étape de sélection 160.

Les étapes de réinitialisation 150, de sélection 160, de pivotement 170 et d'affichage de menus 180 sont optionnelles. L'ordre de ces étapes est donné à titre arbitraire, ces étapes pouvant être réalisées dans des ordres différents. Chacune de ces étapes est mise en œuvre par le calculateur 16 en interaction avec le casque 14 et les périphériques 20.

Ainsi, le procédé permet la modélisation en trois dimensions d'un ou plusieurs murs d'écran de vidéosurveillance affichant, en temps réel ou en temps différé, de multiples vidéos issues de caméras de vidéosurveillance. Selon l'invention, les surfaces de projection sont, en effet, des modélisations de murs d'écrans non limités en dimensions, contrairement aux murs d'écrans de l'état de la technique.

Les capteurs de mouvements situés sur le casque 14 de réalité virtuelle permettent à l'utilisateur de facilement avoir accès à l'ensemble des vidéos ou des images affichées sur les différentes surfaces de projection S. Les différents périphériques 20 d'acquisition de commandes permettent, également, à l'utilisateur d'avoir accès aisément à l'intégralité des surfaces de projection, par exemple, de les baisser, de les lever, de les faire pivoter, et aussi de s'en approcher ou de s'en éloigner. D'autres actions sur les périphériques 20 d'acquisition de commande permettent également d'inverser, de remplacer, de choisir, de mettre en évidence, de redimensionner ou de piloter le contenu des écrans E des surfaces de projection. L'ergonomie de l'utilisateur est donc améliorée par rapport à l'état de la technique, ce qui permet, notamment, d'augmenter le taux de détection de situations à risque sur les vidéos de surveillance. Ainsi, la réalisation d'action sur les images ou vidéos affichées est facilitée par rapport à l'état de la technique.

Le procédé d'affichage permet, également, à plusieurs utilisateurs reliés en réseau, de voir en même temps les mêmes surfaces de projection, mêmes si ces utilisateurs sont physiquement à des endroits différents.

Ainsi, le système et le procédé selon l'invention permettent l'affichage de multiples vidéos ou images sur le même afficheur 23 d'un casque 14 de réalité virtuelle avec un encombrement minimum et en réduisant la consommation énergétique et les nuisances sonores en comparaison des murs d'écran de l'état de la technique.

## Revendications

1. Procédé d'affichage d'images ou de vidéos sur un afficheur (23), l'afficheur (23) étant mobile et présentant une position repérée dans un premier repère (R1), l'afficheur (23) étant compris dans un casque de réalité virtuelle (14), le procédé comprenant :

   - une étape de réception d'au moins deux images ou vidéos, les images ou vidéos étant issues de caméras de vidéo-surveillance,
   - une étape d'acquisition (120) en temps réel de la position de l'afficheur (23) dans le premier repère (R1),
   - une étape de calcul (130) d'un agencement des au moins deux images ou vidéos reçues sur au moins une surface de projection (S) appartenant à un monde virtuel défini dans un deuxième repère (R2), le deuxième repère (R2) étant l'image du première repère (R1) par une combinaison de transformations géométriques, la au moins une surface de projection (S) étant une modélisation d'un mur d'écrans, un mur d'écrans étant formé d'un ensemble d'écrans agencés côte à côte, la au moins une surface de projection (S) présentant au moins une face comprenant des écrans (E) propres à afficher des images ou des vidéos, chaque écran (E) étant un emplacement d'affichage sur la surface de projection (S), chaque écran (E) comprenant une configuration de repos selon laquelle aucune image ou vidéo n'est affichée sur ledit écran (E) et une configuration d'affichage selon laquelle une image ou vidéo est affichée sur ledit écran (E), l'étape de calcul (130) comprenant le calcul de la position de chaque image ou vidéo considérée sur la au moins une surface de projection (S) de sorte que chaque position d'une image ou d'une vidéo soit localisée à l'emplacement d'un écran (E) différent pour chaque image ou vidéo, les images ou vidéos agencées sur la surface de projection (S) étant indépendantes les unes des autres,
   - une première étape d'affichage des images ou vidéos reçus sur les écrans correspondants de la surface de projection (S), et
   - une deuxième étape d'affichage (140) sur l'afficheur (23) d'au moins une partie de l'au moins une surface de projection (S) vue depuis un point d'observation (P2') suivant une direction (Y2') d'observation dans le deuxième repère (R2), le point d'observation (P2') et la direction (Y2') d'observation étant déterminés en temps réel en fonction de la position de l'afficheur (23) dans le premier repère (R1).

2. Procédé d'affichage selon la revendication 1, dans lequel l'étape d'affichage comprend :

   • une phase de détermination des éléments du monde virtuel situés dans un cône (C), de sommet le point d'observation (P2') et de hauteur la direction d'observation (Y2'),
   • une phase de projection desdits éléments déterminés sur une surface plane (P) perpendiculaire à la hauteur du cône (C), et
   • l'affichage de la surface plane (P) sur l'afficheur (23).

3. Procédé d'affichage selon la revendication 1 ou 2, dans lequel le procédé comprend, en outre, la sélection (160) d'au moins une image ou vidéo lorsque l'image ou la vidéo est affichée sur un endroit prédéfini de l'afficheur (23) pour effectuer des actions sur chaque image ou vidéo sélectionnée.

4. Procédé d'affichage selon la revendication 3, dans lequel les actions sont choisies dans un groupe comprenant : le déplacement dans l'agencement de la surface de projection d'une image ou vidéo sélectionnée, l'inversion dans l'agencement de la surface de projection de la position de deux images ou vidéos lorsqu'au moins deux images ou vidéos sont sélectionnées, la suppression d'une ou plusieurs images ou vidéos sélectionnées, et la mise en pause, la lecture accélérée, la lecture à rebours et le rembobinage d'une ou plusieurs vidéos sélectionnées.

5. Procédé d'affichage selon l'une quelconque des revendications précédentes, dans lequel la surface de projection a une forme choisie dans un groupe comprenant : une sphère, un cylindre, un ellipsoïde, un hyperboloïde, un paraboloïde et un plan.

6. Procédé d'affichage selon l'une quelconque des revendications précédentes, dans lequel le procédé comprend, en outre, le pivotement (170) sur elle-même de la surface de projection (S) dans le deuxième repère (R2) lorsqu'une zone prédéterminée de la surface de projection (S) est affichée sur l'afficheur (23) pendant un temps prédéterminé.

7. Procédé d'affichage selon l'une quelconque des revendications précédentes, dans lequel l'étape d'affichage (140) comprend la reproduction du son d'au moins une vidéo affichée sur l'afficheur (23), le volume du son de la vidéo affichée étant déterminé en fonction de la distance dans le deuxième repère (R2) entre le point d'observation (P2') et un point de la partie de la surface de projection (S) affichée sur l'afficheur (23).

8. Système d'affichage (10) d'images ou de vidéos, le système (10) comprenant :

   - un afficheur (23), l'afficheur (23) étant mobile et présentant une position repérée dans un premier repère (R1), l'afficheur (23) étant compris dans un casque de réalité virtuelle (14),
   - des capteurs de mesure (130) en temps réel de la position de l'afficheur (23) dans le premier repère (R1), et
   - un produit programme d'ordinateur comprenant des instructions de programme, le programme d'ordinateur étant chargeable sur une unité de traitement de données (30) et configuré pour entraîner pour la mise en œuvre des étapes suivantes :

      ◦ une étape de réception d'au moins deux images ou vidéos, les images ou vidéos étant issues de caméras de vidéo-surveillance,
      ◦ une étape de calcul (130) d'un agencement des au moins deux images ou vidéos reçues sur au moins une surface de projection (S) appartenant à un monde virtuel défini dans un deuxième repère (R2), le deuxième repère (R2) étant l'image du premier repère (R1) par une combinaison de transformations géométriques,

   la au moins une surface de projection (S) étant une modélisation d'un mur d'écrans, un mur d'écrans étant formé d'un ensemble d'écrans agencés côte à côte,

   la au moins une surface de projection (S) présentant au moins une face comprenant des écrans (E) propres à afficher des images ou des vidéos, chaque écran (E) étant un emplacement d'affichage sur la surface de projection (S), chaque écran (E) comprenant une configuration de repos selon laquelle aucune image ou vidéo n'est affichée sur ledit écran (E) et une configuration d'affichage selon laquelle une image ou vidéo est affichée sur ledit écran (E),

   l'étape de calcul (130) comprenant le calcul de la position de chaque image ou vidéo considérée sur la au moins une surface de projection (S) de sorte que chaque position d'une image ou d'une vidéo soit localisée à l'emplacement d'un écran (E) différent pour chaque image ou vidéo,

   les images ou vidéos agencées sur la surface de projection (S) étant indépendantes les unes des autres,

      ◦ une première étape d'affichage des images ou vidéos reçus sur les écrans correspondants de la surface de projection (S), et
      ◦ une deuxième étape d'affichage (140) sur l'afficheur (23) d'au moins une partie de l'au moins une surface de projection (S) vue depuis un point d'observation (P2') suivant une direction (Y2') d'observation dans le deuxième repère (R2), le point d'observation (P2') et la direction (Y2') d'observation étant déterminés en temps réel en fonction de la position de l'afficheur (23) dans le premier repère (R1).

9. Système d'affichage (10) selon la revendication 8, comprenant en outre des périphériques (20) d'acquisition de commande actionnables par l'utilisateur pour effectuer des actions sur les images ou vidéos affichées sur l'afficheur (23).

**Patentansprüche**

1. Verfahren zum Anzeigen von Bildern oder von Videos auf einer Anzeige (23), wobei die Anzeige (23) bewegbar ist und eine Koordinaten-Position in einem ersten Koordinatensystem (R1) hat, wobei die Anzeige (23) in einem Virtuelle-Realität-Helm (14) enthalten ist, wobei das Verfahren aufweist:

   - einen Schritt des Empfangens von zumindest zwei Bildern oder Videos, wobei die Bilder oder Videos von Videoüberwachung-Kameras stammen,

- einen Schritt des Erlangens (120) der Position der Anzeige (23) im ersten Koordinatensystem (R1) in Echtzeit,

- einen Schritt des Berechnens (130) einer Anordnung der zumindest zwei empfangenen Bilder oder Videos auf zumindest einer Projektionsfläche (S), welche zu einer virtuellen Welt gehört, welche in einem zweiten Koordinatensystem (R2) definiert ist, wobei das zweite Koordinatensystem (R2) das Bild des ersten Koordinatensystems (R1) mittels einer Kombination geometrischer Transformationen ist,

wobei die zumindest eine Projektionsfläche (S) eine Modellierung einer Wand von Bildschirmen ist, wobei eine Wand von Bildschirmen aus einer Gruppe von Bildschirmen gebildet ist, welche nebeneinander angeordnet sind,

wobei die zumindest eine Projektionsfläche (S) zumindest eine Fläche hat, welche Bildschirme (E) aufweist, welche imstande sind, Bilder oder Videos anzuzeigen, wobei jeder Bildschirm (E) eine Anzeigestelle auf der Projektionsfläche (S) ist, wobei jeder Bildschirm (E) eine Ruhe-Konfiguration aufweist, gemäß welcher kein Bild oder Video auf dem besagten Bildschirm (E) angezeigt wird, und eine Anzeige-Konfiguration, gemäß welcher ein Bild oder Video auf dem besagten Bildschirm (E) angezeigt wird,

wobei der Schritt des Berechnens (130) aufweist das Berechnen der Position jedes in Betracht gezogenen Bildes oder Videos auf der zumindest einen Projektionsfläche (S), sodass jede Position eines Bildes oder eines Videos an der Stelle eines Bildschirms (E) angeordnet ist, welche für jedes Bild oder Video verschieden ist, wobei die Bilder oder Videos, welche auf der Projektionsfläche (S) angeordnet sind, unabhängig voneinander sind,

- einen ersten Schritt des Anzeigens der empfangenen Bilder oder Videos auf den korrespondierenden Bildschirmen der Projektionsfläche (S) und

- einen zweiten Schritt des Anzeigens (140) auf der Anzeige (23) von zumindest einem Teil der zumindest einen Projektionsfläche (S) gesehen von einem Beobachtungspunkt (P2') aus entlang einer Beobachtungsrichtung (Y2') im zweiten Koordinatensystem (R2), wobei der Beobachtungspunkt (P2') und die Beobachtungsrichtung (Y2') in Echtzeit in Abhängigkeit von der Position der Anzeige (23) im ersten Koordinatensystem (R1) ermittelt werden.

**2.** Verfahren zum Anzeigen gemäß Anspruch 1, wobei der Schritt des Anzeigens aufweist:

• eine Phase des Ermittelns von Elementen der virtuellen Welt, welche in einem Kegel (C) angeordnet sind, dessen Scheitelpunkt der Beobachtungspunkt (P2') und dessen Höhe die Beobachtungsrichtung (Y2') ist,

• eine Phase des Projizierens der besagten ermittelten Elemente auf eine ebene Fläche (P), welche senkrecht zur Höhe des Kegels (C) ist, und

• das Anzeigen der ebenen Fläche (P) auf der Anzeige (23).

**3.** Verfahren zum Anzeigen gemäß Anspruch 1 oder 2, wobei das Verfahren ferner aufweist das Auswählen (160) von zumindest einem Bild oder Video, wenn das Bild oder das Video an einem vordefinierten Ort der Anzeige (23) angezeigt wird, um Aktionen an jedem ausgewählten Bild oder Video durchzuführen.

**4.** Verfahren zum Anzeigen gemäß Anspruch 3, wobei die Aktionen ausgewählt sind aus einer Gruppe, aufweisend: das Verschieben eines ausgewählten Bildes oder Videos in der Anordnung der Projektionsfläche, das Invertieren der Position von zwei Bildern oder Videos in der Anordnung der Projektionsfläche, wenn zumindest zwei Bilder oder Videos ausgewählt sind, das Unterdrücken eines oder mehrerer ausgewählter Bilder oder Videos sowie das Pausieren, das beschleunigte Abspielen, das Rückwärtsabspielen und das Zurückspulen eines oder mehrerer ausgewählter Videos.

**5.** Verfahren zum Anzeigen gemäß irgendeinem der vorherigen Ansprüche, wobei die Projektionsfläche eine Form hat, welche ausgewählt ist aus einer Gruppe, aufweisend: eine Kugel, einen Zylinder, ein Ellipsoid, ein Hyperboloid, ein Paraboloid und eine Ebene.

**6.** Verfahren zum Anzeigen gemäß irgendeinem der vorherigen Ansprüche, wobei das Verfahren ferner aufweist das Schwenken (170) der Projektionsfläche (S) auf sich selbst im zweiten Koordinatensystem (R2), wenn eine vorbestimmte Zone der Projektionsfläche (S) für eine vorbestimmte Zeit auf der Anzeige (23) angezeigt wird.

**7.** Verfahren zum Anzeigen gemäß irgendeinem der vorherigen Ansprüche, wobei der Schritt des Anzeigens (140) aufweist die Wiedergabe des Tons von zumindest einem Video, welches auf der Anzeige (23) angezeigt wird, wobei die Lautstärke des Tons des angezeigten Videos in Abhängigkeit vom Abstand im zweiten Koordinatensystem (R2) zwischen dem Beobachtungspunkt (P2') und einem Punkt des Teils der Projektionsfläche (S), welcher auf der Anzeige (23) angezeigt wird, ermittelt wird.

8. System zum Anzeigen (10) von Bildern oder von Videos, wobei das System (10) aufweist:

   - eine Anzeige (23), wobei die Anzeige (23) bewegbar ist und eine Koordinaten-Position in einem ersten Koordinatensystem (R1) hat, wobei die Anzeige (23) in einem Virtuelle-Realität-Helm (14) enthalten ist,
   - Sensoren zum Messen (130) der Position der Anzeige (23) im ersten Koordinatensystem (R1) in Echtzeit und
   - ein Computerprogrammprodukt, welches Programminstruktionen aufweist, wobei das Computerprogramm auf eine Einheit zur Verarbeitung von Daten (30) ladbar ist und eingerichtet ist, um das Ausführen der folgenden Schritte zu veranlassen:

     ◦ einen Schritt des Empfangens von zumindest zwei Bildern oder Videos, wobei die Bilder oder Videos von Videoüberwachung-Kameras stammen,
     ◦ einen Schritt des Berechnens (130) einer Anordnung der zumindest zwei empfangenen Bilder oder Videos auf zumindest einer Projektionsfläche (S), welche zu einer virtuellen Welt gehört, welche in einem zweiten Koordinatensystem (R2) definiert ist, wobei das zweite Koordinatensystem (R2) das Bild des ersten Koordinatensystems (R1) mittels einer Kombination geometrischer Transformationen ist, wobei die zumindest eine Projektionsfläche (S) eine Modellierung einer Wand von Bildschirmen ist, wobei eine Wand von Bildschirmen aus einer Gruppe von Bildschirmen gebildet ist, welche nebeneinander angeordnet sind, wobei die zumindest eine Projektionsfläche (S) zumindest eine Fläche hat, welche Bildschirme (E) aufweist, welche imstande sind, Bilder oder Videos anzuzeigen, wobei jeder Bildschirm (E) eine Anzeigestelle auf der Projektionsfläche (S) ist, wobei jeder Bildschirm (E) eine Ruhe-Konfiguration aufweist, gemäß welcher kein Bild oder Video auf dem besagten Bildschirm (E) angezeigt wird, und eine Anzeige-Konfiguration, gemäß welcher ein Bild oder Video auf dem besagten Bildschirm (E) angezeigt wird, wobei der Schritt des Berechnens (130) aufweist das Berechnen der Position jedes in Betracht gezogenen Bildes oder Videos auf der zumindest einen Projektionsfläche (S), sodass jede Position eines Bildes oder eines Videos an der Stelle eines Bildschirms (E) angeordnet ist, welche für jedes Bild oder Video verschieden ist, wobei die Bilder oder Videos, welche auf der Projektionsfläche (S) angeordnet sind, unabhängig voneinander sind,
     ◦ einen ersten Schritt des Anzeigens der empfangenen Bilder oder Videos auf den korrespondierenden Bildschirmen der Projektionsfläche (S) und
     ◦ einen zweiten Schritt des Anzeigens (140) auf der Anzeige (23) von zumindest einem Teil der zumindest einen Projektionsfläche (S) gesehen von einem Beobachtungspunkt (P2') aus entlang einer Beobachtungsrichtung (Y2') im zweiten Koordinatensystem (R2), wobei der Beobachtungspunkt (P2') und die Beobachtungsrichtung (Y2') in Echtzeit in Abhängigkeit von der Position der Anzeige (23) im ersten Koordinatensystem (R1) ermittelt werden.

9. System zum Anzeigen (10) gemäß Anspruch 8, welches ferner vom Benutzer betätigbare Steuerungserfassungsvorrichtungen (20) aufweist, um Aktionen an den Bildern oder Videos durchzuführen, welche auf der Anzeige (23) angezeigt werden.

**Claims**

1. A method for displaying images or videos on a display (23), the display (23) being mobile and having a marked position in a first mark (R1), the display (23) being comprised in a virtual reality headset (14), the method comprising:

   - a step of receiving at least two images or videos, the images or videos coming from video surveillance cameras,
   - a step of real-time acquisition (120) of the position of the display (23) in the first mark (R1),
   - a step of computing (130) an arrangement of the least two images or videos received on at least one projection surface (S) belonging to a virtual world defined in a second mark (R2), the second mark (R2) being the image of the first mark (R1) by a combination of geometric transformations, the at least one projection surface (S) being a model of a screen wall, a screen wall being formed of a set of screens arranged side by side, the at least one projection surface (S) having at least one face comprising screens (E) suitable for displaying images or videos, each screen (E) being a display location on the projection surface (S), each screen (E) comprising an idle configuration according to which no image or video is displayed on said screen (E) and a display configuration according to which an image or video is displayed on said screen (E),

the computing step (130) comprising computing the position of each considered image or video on the at least one projection surface (S) so that each position of an image or video is located at the location of a different screen (E) for each image or video,

the images or videos arranged on the projection surface (S) being independent of each other,

- a first step of displaying the received images or videos on the corresponding screens of the projection surface (S), and

- a second step of displaying (140), on the display (23), at least a part of the projection surface (S) seen from an observation point (P2') in an observation direction (Y2') in the second mark (R2), the observation point (P2') and the observation direction (Y2') being determined in real time as a function of the position of the display (23) in the first mark (R1).

2.  The display method according to claim 1, wherein the display step comprises :

   • a phase for determining elements situated in a cone (C), the observation point (P2') being the apex of the cone and the observation direction (Y2') being the height of the cone,
   • a phase for projecting said determined elements on a planar surface (P) perpendicular to the height of the cone (C), and
   • the display of the planar surface (P) on the display (23).

3.  The display method according to claim 1 or 2, wherein the method further comprises selecting (160) at least one image or video when the image or video is displayed on a predefined location of the display (23) to perform actions on each selected image or video.

4.  The display method according to claim 3, wherein the actions are chosen from a group comprising: moving a selected image or video in the arrangement of the projection surface; reversing of the position of two images or videos in the arrangement of the projection surface when at least two images or videos are selected; deleting one or more selected images or videos; and pausing, watching in fast motion, backwards reading and rewinding of one or more selected videos.

5.  The display method according to any one of the preceding claims, wherein the projection surface has a shape chosen from a group comprising: a sphere, a cylinder, an ellipsoid, a hyperboloid, a paraboloid and a plane.

6.  The display method according to any one of the preceding claims, wherein the method further comprises the pivoting (170) around itself of the projection surface (S) in the second mark (R2) when a predetermined zone of the projection surface (S) is displayed on the display (23) for a predetermined length of time.

7.  The display method according to any one of the preceding claims, wherein the display step (140) comprises reproducing the sound of at least one video displayed on the display (23), the volume of the sound of the displayed video being determined as a function of the distance in the second mark (R2) between the observation point (P2') and a point of the part of the projection surface (S) displayed on the display (23).

8.  A system (10) for displaying images or videos, the system comprising:

   - a display, the display being movable in a first mark (R1), the display (23) being comprised in a virtual reality headset (14),
   - sensors for real-time measurement (130) of the position of the display (23) in the first mark (R1), and
   - a computer program product comprising program instructions, the computer program being able to be loaded on a data processing unit (30) and configured to drive the implementation of the following steps:

      ○ a step of receiving at least two images or videos, the images or videos coming from video surveillance cameras,
      ○ a step of computing (130) an arrangement of the least two images or videos received on at least one projection surface (S) belonging to a virtual world defined in a second mark (R2), the second mark (R2) being the image of the first mark (R1) by a combination of geometric transformations,

      the at least one projection surface (S) being a model of a screen wall, a screen wall being formed of a set of screens arranged side by side,

      the at least one projection surface (S) having at least one face comprising screens (E) suitable for displaying images or videos, each screen (E) being a display location on the projection surface (S), each screen (E) comprising an idle configuration according to which no image or video is displayed on said screen (E) and a display configuration according to which an image or video is displayed on said screen (E),

      the computing step (130) comprising computing the position of each considered image or video on the at least one projection surface (S) so that each position of an image or video is located at the location of a different screen (E) for each image or video, the images or videos arranged on the projection surface (S) being independent of each other,

◦ a first step of displaying the received images or videos on the corresponding screens of the projection surface (S), and

◦ a second step of displaying (140), on the display (23), at least part of the projection surface (S) seen from an observation point (P2') in an observation direction (Y2') in the second mark (R2), the observation point (P2') and the observation direction (Y2') being determined in real time as a function of the position of the display (23) in the first mark (R1).

9. The display system (10) according to claim 8, further comprising peripherals (20) for acquiring commands that can be actuated by the user to perform actions on the images or videos displayed on the display (23).

## FIG.1

## FIG.2

```
┌─────────────────────────────────┐
│   Réception de flux de données  │──── 100
└─────────────────────────────────┘
                 │
                 ▼
┌─────────────────────────────────┐
│   Disposition du casque 14 sur la│──── 110
│      tête de l'utilisateur       │
└─────────────────────────────────┘
                 │
                 ▼
┌─────────────────────────────────┐
│   Mesure en temps réel de la position│──── 120
│          du casque 14            │
└─────────────────────────────────┘
                 │
                 ▼
┌─────────────────────────────────┐
│ Calcul d'un agencement d'images ou de vidéos│──── 130
│    sur une surface de projection S │
└─────────────────────────────────┘
                 │
                 ▼
┌─────────────────────────────────┐
│     Affichage du monde virtuel   │──── 140
│        sur l'afficheur 23        │
└─────────────────────────────────┘
```

| Réinitialisation | Sélection d'un écran | Pivotement de la surface de projection S | Affichage de menus |

150     160     170     180

## FIG.3

FIG.4

FIG.5

FIG.6

## FIG.7

## FIG.8

## FIG.9

FIG.10

FIG.11

FIG.12

EP 3 038 354 B1

## RÉFÉRENCES CITÉES DANS LA DESCRIPTION

**Documents brevets cités dans la description**

- US 2002036649 A
- US 2012068914 A
- EP 2624581 A
- WO 2012153805 A
- JP 2008160203 A